Europäisches Patentamt

European Patent Office

Office européen des brevets

(19)

(11) Veröffentlichungsnummer: **0 162 240**
**B1**

# (12) EUROPÄISCHE PATENTSCHRIFT

(45) Veröffentlichungstag der Patentschrift:
16.12.87

(51) Int. Cl.⁴: **C 12 G  3/08**

(21) Anmeldenummer: **85103828.1**

(22) Anmeldetag: **29.03.85**

---

(54) **Verfahren zum Herabsetzen des Alkoholgehalts alkoholhaltiger Getränke, insbesondere Wein und Schaumwein.**

---

(30) Priorität: **06.04.84 DE 3413085**

(43) Veröffentlichungstag der Anmeldung:
**27.11.85 Patentblatt 85/48**

(45) Bekanntmachung des Hinweises auf die Patenterteilung:
**16.12.87 Patentblatt 87/51**

(84) Benannte Vertragsstaaten:
**BE CH DE FR GB IT LI LU NL**

(56) Entgegenhaltungen:
**WO-A-82/02405**
**DE-A-2 323 094**
**DE-A-2 339 206**
**DE-A-3 344 628**

(73) Patentinhaber: **Henkell & Co., Biebricher Allee 142, D-6200 Wiesbaden 1 (DE)**

(72) Erfinder: **Weiss, Manfred, Hinter den Zäunen 16, D-6229 Kiedrich (DE)**

(74) Vertreter: **Schubert, Siegmar, Dipl.- Ing., Patentanwälte Dr. V. Schmied- Kowarzik Dr. P. Weinhold Dr.- Ing. G. Dannenberg Dr. D. Gudel Dipl.- Ing. S. Schubert Dr. P. Barz Grosse Eschenheimer Strasse 39, D-6000 Frankfurt am Main 1 (DE)**

---

EP 0 162 240 B1

**Beschreibung**

Die Erfindung betrifft ein Verfahren zum Herabsetzen des Alkoholgehalts alkoholhaltiger Getränke, insbesondere Wein und Schaumwein, nach dem Oberbegriff des Anspruchs 1.

Ein solches Trennverfahren gehört insbesondere zur Alkoholentfernung durch Hyperfiltration, auch Umkehrosmose genannt, aus Bier zum Stand der Technik (DDS RO-System für Alkoholentfernung der DDS RO-DIVISION A/S DE DANSKE SUKKERFABRIKKER, Nakskov, Dänemark). Zu den Vorteilen dieses Verfahrens zählt, daß keine Wärmeverschlechterung des Bieres eintritt, da die Hyperfiltration in einem weiten Temperaturbereich ausgeführt werden kann. Das Bier wird während der Hyperfiltration unter $CO_2$-Druck gehalten, wodurch Entgasung oder Oxydation verhindert werden. Schließlich ist der Energieverbrauch für diesen Prozeß relativ niedrig, da die einzige Triebkraft der Pumpendruck ist.

Bei der Anwendung der Umkehrosmose auf Wein ergaben sich zunächst Aromaverluste, die allerdings durch geeignete Membranen reduziert werden können. Es lassen sich Aromastoffe des Weines zum entalkoholisierten Wein zurückführen. Nachteilig ist aber der hohe Wasserverbrauch zur Auswaschung des Alkohols aus dem Wein, der ein Vielfaches der Weinmenge beträgt (Die Weinwirtschaft, Heft 1/13.1.84 Seite 25 "Wein ohne Alkohol").

Durch den hohen erforderlichen Zusatz von Fremdwasser zur Durchführung des voranstehenden Umkehrosmoseverfahrens ist dieses unwirtschaftlich. Abgesehen davon kann, wenn das Fremdwasser in Form von Leitungswässer zugesetzt wird, dieses Fremdwasser zu einer unerwünschten bzw. unzulässigen Beeinflussung des zu entalkoholisierenden Getränks führen, insbesondere, wenn es um das Herabsetzen des Alkoholgehalts von Schaumwein geht.

Weiterhin ist bei dem Herabsetzen des Alkoholgehalts von Wein oder Schaumwein zu beachten, daß nicht nur die Aromastoffe erhalten bleiben sollen, sondern auch die Extraktstoffe, die zusammen mit den Aromastoffen die sogenannten Inhaltsstoffe bilden. Auch bei dem Umkehrosmoseverfahren werden dem zu entalkoholisierenden Wein oder Schaumwein Extraktstoffe entzogen, und zwar um so mehr, je mehr Alkohol entzogen wird.

Zum Stand der Technik gehört bereits ein Verfahren zur Herstellung von alkoholreduziertem Wein, Schaumwein oder weinähnlicher Getränke nach dem Oberbegriff des Anspruchs 1 (DE-A-2 339 206), bei dessen Anwendung die wertbestimmenden Bestandteile des Weins, Schaumweins oder weinähnlichen Getränks weitgehend erhalten bleiben, indem dem Getränk nur Alkohol/Wassergemisch entzogen wird. Da dem Getränk generell Wasser vor oder nach dem Entzug des Alkohol/ Wassergemischs zugesetzt werden muß, werden dafür zur Aufrechterhaltung der Qualität des Getränks Wässer besonderer Eigenschaften, insbesondere salzarme Wässer empfohlen. Ein Zusatz jeglichen Fremdwassers soll aber dadurch ausgeschlossen werden, daß aus dem bei der Umkehrosmose anfallenden Alkohol/Wassergemisch Wasser durch Anwendung von Destillationsverfahren oder auch eine erneute Anwendung der Umkehrosmose rückgewonnen wird. In diesem letztgenannten Fall kann aber die dem Getränk entzogene Alkoholmenge nicht ersetzt werden, d.h., die Inhaltsstoffe einschließlich des Aromas des Getränks werden entsprechend in dem alkoholreduzierten Getränk angereichert und können damit den Geschmack des Getränks in unerwünschter Weise beeinflussen. - Wie geeignetes Zusatzwasser zum Ersatz für den abgetrennten Alkohol gewonnen wird, ist in der DE-A-2 399 206 nicht ausgeführt, auch nicht, wie solches Zusatzwasser in das Verfahren mit Rückgewinnung von Wasser aus dem durch Umkehrosmose abgetrennten Alkohol/Wassergemisch einzuführen ist.

Der vorliegenden Erfindung liegt daher die Aufgabe zugrunde, das Verfahren zum Herabsetzen des Alkoholgehalts der eingangs genannten Gattung so weiterzuentwickeln, daß die Konzentration der Inhaltsstoffe in dem alkoholreduzierten Getränk ohne merkliche geschmackliche Beeinflussung dieses Getränks erhalten bleibt.

Diese Aufgabe wird durch die im kennzeichnenden Teil des Anspruchs 1 angegebene Erfindung gelöst.

Erfindungsgemäß wird der vorgelegten Getränkemenge in der Rückverdünnungsphase des Verfahrens nur eine Wassermenge zugeführt, die der entzogenen Permeatdestillatmenge, d.h. praktisch dem entzogenen Alkohol gleich ist. Diese zuzusetzende Wassermenge wird durch schonende Vakuumdestillation einer zusätzlichen Getränkemenge erzeugt, womit besonders geeignetes Zusatzwasser wirtschaftlich gewonnen wird.

Dabei ist die Verfahrensweise besonders effektiv, daß das vorgelegte Volumen des Getränks zunächst bis zu einem vorbestimmten Wert absinken soll, der dann durch Zufuhr von Permeatwasser und dem aus zusätzlichem Getränk durch Vakuumdestillation gewonnen Wasser konstant gehalten wird.

Nach Anspruch 3 kann durch Entziehen von Alkohol/Wassergemisch aus dem Wein oder Schaumwein das vorgelegte Ausgangsvolumen bis auf 40 % absinken, bis die Zufuhr des Permeatwassers und Zusatzwassers beginnt. Dieser Volumenreduktion stand die Befürchtung entgegen, daß bei dem Entalkoholisieren von Wein oder Schaumwein Weinstein auskristallisieren kann, welches die Membranen der Umkehrosmoseanlage nachteilig beeinflußt, wenn nicht das Ausgangsvolumen des Getränks gehalten wird. Eine solche Volumenreduktion bis 40 % des Ausgangsvolumens bei Wein oder Schaumwein kann nach Anspruch 3 ohne Verschlechterung des Umkehrosmosevorgangs durch Beigabe von Metaweinsäure und/ oder Inhibitoren gegen das Auskristallisieren von Weinsteinsäure zu dem Getränk erzielt werden.

Aus dem geschilderten Ablauf des Umkehrosmoseverfahrens, welches zunächst eine Volumenverminderung des vorgelegten Getränks vorsieht, ergibt sich die Zweckmäßigkeit, das fortlaufend gewonnene Permeatwasser zwischenzuspeichern, bis dieses wieder dem vorgelegten Getränk zugesetzt werden kann. Weitere zweckmäßige Pufferspeicher sind für das Permeat und für das aus dem zusätzlichen Getränk durch Destillation gewonnene Getränkedestillat vorgesehen. Diese Pufferungen gestatten eine günstige Abfolge der einzelnen Verfahrensschritte und Mehrfach-Ausnutzung von Anlagenteilen, insbesondere der Permeat-Vakuumdestillationsanlage. Diese kann in einer Verfahrensphase noch Permeatwasser aus Permeat gewinnen, während bereits die Destillation des zusätzlichen Getränks zur Herstellung des wenig alkoholhaltigen Getränkedestillats anläuft, aus dem dann durch die gleiche Permeat-Vakuumdestillationsanlage Wasser gewonnen wird, das bis zum Erreichen des Ausgangsvolumens dem vorgelegten, jetzt entalkolisierten Getränk zugesetzt wird.

Zuvor werden nach Abtrennung der gewünschten Menge Alkohol aus dem vorgelegten Getränk das zwischengespeicherte Permeatwasser und Permeat zu dem vorgelegten entalkolisierten Getränk zurückgeführt.

Die Gewinnung des zusätzlich zu dem vorgelegten Getränk zugeführten destilierten Wassers aus zusätzlichem Getränk geschieht besonders vorteilhaft nach Anspruch 2 durch eine zweistufige Vakuumdestillation. Besonders vorteilhaft wird dazu aus dem zusätzlichen Getränk zunächst in einem getrennten Vakuumdestillationsverfahren, zu dessen Ausübung eine Vakuumdestillationsanlage relativ geringer Kapazität ausreicht, wenig alkohohlhaltiges Getränkedestillat gewonnen, während der Getränkesumpf verworfen wird, und das Getränkedestillat wird anschließend in den Permeat-Vakuumsdestillationsprozeß eingeführt, in dem dann der Alkohol aus dem Getränkedestillat ausdestilliert wird. Dabei entsteht das praktisch alkoholfreie Wasser in dem Bereich, in dem sonst das Permeatwasser anfällt. - Das aus dem zusätzlichen Getränk gewonnene Wasser kann bei geeigneten Verfahrensparametern noch den Rest der Inhaltsstoffe ausgleichen, die dem vorgelegten zu behandelnden Getränk durch die Alkoholabtrennung entzogen werden.

Nach Anspruch 4, wonach die Umkehrosmose bei ca. 60 bar erfolgt, wird die gewünschte hohe Trennwirkung zwischen dem alkoholreduzierten Retentat, welches zu dem vorgelegten Getränk zurückgeführt wird, und dem Permeat, im wesentlichen Wasser/Alkoholgemisch erzielt. Nach Anspruch 5, wonach das Permeat vor der Permeat-Vakuumdestillation durch Temperaturaustausch mit dem von der Destillationsstufe kommenden Permeatwasser vorgewärmt wird, wird die Wärmeenergiebilanz des Verfahrens verbessert.

Nach den voranstehenden Verfahren entalkolisierte $CO_2$-haltige Getränke, insbesondere Qualitätsschaumweine, erhalten in besonders vorteilhafter Weise ihre ursprünglichen Eigenschaften, wobei lediglich eine Herabsetzung des $CO_2$-Gehalts eintreten kann. Bei der Behandlung von Schaumwein kann eine Verminderung des $CO_2$-Gehalts von 6 bar um ca. 1 bar auf 5 bar eintreten. Die zwangsläufig eintretende Verminderung des $CO_2$-Gehalts ist für das Endprodukt dann unerheblich, wenn nach Anspruch 6 das vorgelegte Getränk mit einem gegenüber dem Endprodukt leicht überhöhten $CO_2$-Gehalt ausgestattet ist.

Eine besonders geeignete Einrichtung zur Durchführung des Verfahrens zum Herabsetzen des Alkoholgehalts alkoholhaltiger Getränke nach den Ansprüchen 1 und 2 ist in Anspruch 7 angegeben. Sie zeichnet sich dadurch aus, daß eine Getränke Vakuumdestillationsanlage zur Gewinnung von schwach alkoholhaltigem Getränkedestillat aus zusätzlichem Getränk vorgesehen ist, welche mit Mitteln zur Einspeisung des aus der Getränke-Vakuumdestillationsanlage gewonnenen Getränkedestillats in die Permeat-Vakuumdestillationsanlage derart in Verbindung steht, daß das Wasser aus dem Getränkedestillat zusätzlich zu dem Permeatwasser in das vorgelegte Getränk zur Aufrechterhaltung eines vorgegebenen Volumens einspeisbar ist.

In Anspruch 7 ist somit dargestellt, daß eine zusätzliche Getränke-Vakuumdestillationsanlage, aus der in einer Destillationsstufe zunächst wenig alkoholhaltiges Getränkedestillat gewonnen wird, mit der zur Alkoholreduktion des Getränks ohnehin vorgesehenen Permeat-Vakuumddestillationsanlage zur Bildung einer wenig aufwendigen Zweistufen-Vakuumdestillationsanlage gekoppelt ist, um aus dem Getränkedestillat praktisch alkoholfreies Wasser zu gewinnen, welches dem vorgelegten Getränk zum Ersatz des aus diesem entzogenen Alkohols zugesetzt wird.

In Anspruch 8 sind die Zwischenspeicher zur Pufferung verschiedener, in dem Gesamtprozeß anfallender Flüssigkeiten definiert, damit der geschilderte Verfahrensablauf nach den Ansprüchen 1 und 2 unter Mehrfachausnutzung einiger Anlagenteile und in einer möglichst kurzen Dauer des Gesamtvorgangs des Alkoholentzugs erfolgen kann.

In Anspruch 9 ist die zur Umkehrosmoseanlage gehörende Hochdruckpumpe angegeben, die in der ersten Stufe des Gesamtverfahrens zum Entzug des Alkohols aus dem Getränk als einzige Energie beansprucht. Dabei ist der Energieverbrauch besonders gering gehalten, da, wie bei der Schilderung des bevorzugten Umkehrosmoseablaufs angegeben, das Volumen des vorgelegten Getränks bis zu einem vorgegebenen Wert absinken darf, so daß entsprechend geringere Mengen durch die Umkehrosmoseanlage umzuwälzen sind. Um auch die zweite Verfahrensstufe zum Entfernen des Alkohols aus dem Permeat durch Vakuumdestillation energiemäßig günstig zu gestalten, ist der nach Anspruch 10 angeordnete Temperaturaustauscher vorgesehen.

Ein beispielhaftes Verfahren zur Herabsetzung des Alkoholgehalts in Qualitätsschaumwein von 11 auf 5% wird im folgenden in Verbindung mit einer hierzu vorgesehen typischen Anlage beschrieben.

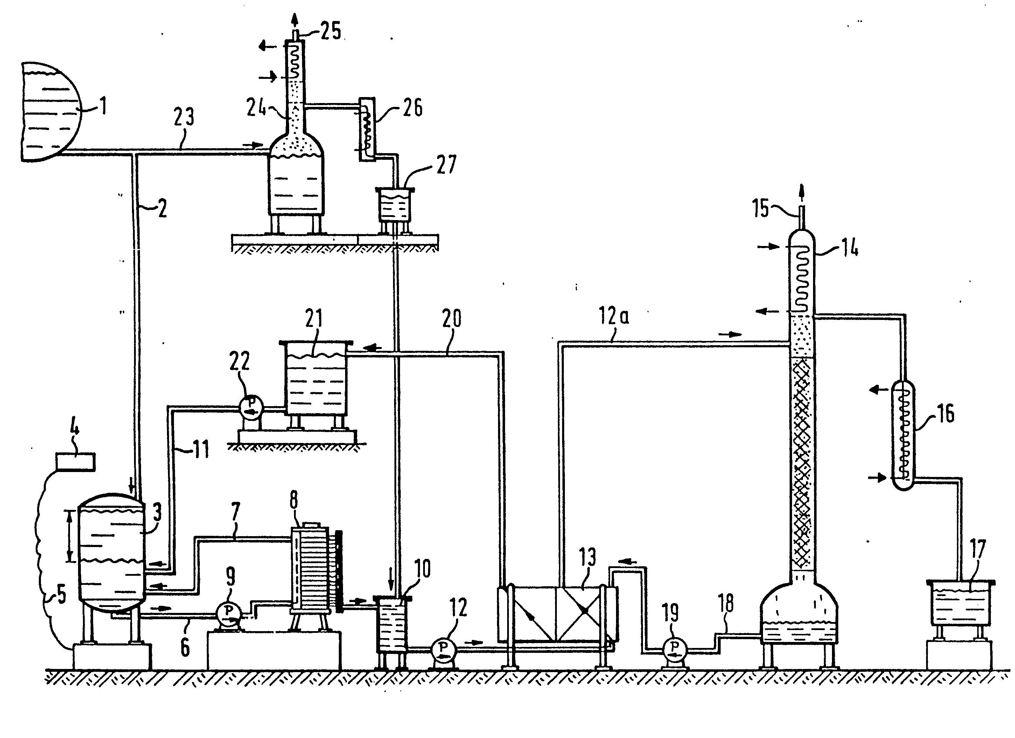

Die Anlage zum Herabsetzen des Alkoholgehalts aus Qualitätsschaumwein ist in der Zeichnung schematisch dargestellt:

In der in der Zeichnung dargestellten Anlage ist in einem Vorratsbehälter 1 fertiger Qualitätsschaumwein gelagert, dessen Alkoholgehalt von etwa 11 Vol.% auf ca. 5 Vol.% herabgesetzt werden soll.

Von dem Vorratsbehälter führt eine Leitung 2 zu einem Vorlagebehälter 3, in den ein vorgegebenes Ausgangsvolumen Qualitätsschaumwein eingespeist wird, welches damit zur Entalkoholisierung vorgelegt ist. Zur Ermittlung des Ausgangsvolumens und der sich im Laufe der Entalkoholisierung einstellender Volumina in dem Vorlagebehälter dient eine sogenannte Sektwaage 4, zu der eine elektrische Leitung 5 von einem nicht dargestellten Geber führt. Das vorgelegte Volumen kann statt dessen auch mit einer Volumenzähleinrichtung erfaßt werden.

An den Vorlagebehälter ist über eine Vorlaufleitung (Getränkeleitung) 6 und eine Rücklaufleitung 7 eine Umkehrosmoseanlage 8 angeschlossen.

Als Umkehrosmoseanlage eignet sich beispielsweise eine Anlage der Firma De Danske Sukkerfabrikker AG, Nakskov (Dänemark) Typ HR 95. Dabei handelt es sich um eine 2 m² Anlage mit runden 2-Komponenten-Membranen, deren Durchmesser ca. 20 cm beträgt und die in Sandwich-Bauweise übereinander angeordnet sind.

Eine Hochdruckpumpe 9 dient zur Umwälzung des Schaumweins in einem Kreislauf durch die Umkehrosmoszanlage 8, die Rücklaufleitung 7, den Vorlagebehälter 3 und die Vorlaufleitung 6. Dabei scheidet die Umkehrosmoseanlage das Permeat ab, welches eine klare neutrale wässrige Flüssigkeit mit ca. 6 Vol. % Alkohol ist. Das Permeat wird einem Permeatsammelbehälter 10 zugeführt.

Der geschilderte Kreislauf des Schaumweins durch die Umkehrosmoseanlage erfolgt zunächst so lange ohne Zufuhr von Wasser -Permeatwasser, das in noch zu schildernder Weise gewonnen wird - durch eine Speiseleitung 11, bis das Volumen des in dem Vorlagebehälter 3 vorgelegten Schaumweins auf ca. 40 % seines Ausgangsvolumens herabgesetzt ist.

Anschließend wird unter Aufrechterhaltung des Schaumwein-Kreislaufs Permeatwasser durch die Speiseleitung 11 in den Vorlagebehälter eingespeist, um das auf 40 % reduzierte Volumen aufrecht zu erhalten.

Zur Gewinnung des Permeatwassers und Rückführung in den Vorlagebehälter wird das Permeat aus dem Permeatsammelbehälter 10 über eine Pumpe 12 und einen Temperaturaustauscher 13 in eine Permeat-Vakuumdestillationsanlage 14 gepumpt. In der Zeichnung ist ein Anschluß 15 für eine Vakuumpumpe erkennbar. Als Permeat-Vakuumdestillationsanlage eignet beispielsweise sich eine Glasvakuum-Destillationsanlage der Firma QVR Klar-Glastechnik GmbH, Wiesbaden-Schierstein.

In der Permeat-Vakuumdestillationsanlage wird das Permeat bei einer Temperatur von etwa 50° C getrennt in Permeatwasser mit weniger als 0,2 Vol.% Alkohol und in ein Permeatdestillat das zu ca. 90 % aus Alkohol besteht und über einen Kühler 16 in einen Permeatdestillat-Sammelbehälter 17 fließt.

Das warme Permeatwasser strömt durch eine Permeatleitung 18, eine Pumpe 19, durch den Wärmeaustauscher 13, einen weiteren Abschnitt der Permeatleitung 20 in einen Permeatwasser-Sammelbehälter 21. Von diesem kann das Permeatwasser über eine Pumpe 22 und die Speiseleitung 11, die ebenfalls ein Abschnitt der Permeatwasserleitung betrachtet werden kann, zu gegebener Zeit in den Vorlagebehälter 3 eingespeist werden. Wie erwähnt beginnt die Einspeisung des Permeatwassers in den Vorlagebehälter durch die Pumpe 22, wenn das Ausgangsvolumen des vorgelegten Schaumweins auf den vorgegebenen Wert von 40 % reduziert ist. Es wird dann während des weiterlaufenden Umkehrosmosevorgangs fortlaufend soviel Permeatwasser in den Vorlagebehälter gepumpt, daß das vorgegebene reduzierte Volumen bis zum Abschluß des Alkoholentzugs gehalten wird. Der Alkoholentzug ist abgeschlossen, sobald in dem Permeatdestillat-Sammelbehälter 17 im Anschluß an die Permeatdestillationsanlage das entsprechende Volumen Alkohol zuzüglich der übrigen in dem Permeatdestillat enthaltenen Stoffe gewonnen ist.

Zusammenfassend sind charakteristische Daten des geschilderten Verfahrens zum Entalkoholisieren von Qualitätsschaumwein, dessen Alkoholgehalt von 11 Vo1.% auf 5 Vol.% reduziert werden soll:

Ausgangsvolumen Schaumwein 100 l in dem Vorlagegefäß

Kohlesäuredruck ca. 6 bar
Schaumweintemperatur 20° C.
Druck in der Umkehrosmoseanlage: 60 bar.
Führung des Schaumweins im Umkehrosmosekreislauf bis zum Erreichen von ca. 40 % des Ausgangsvolumens im Vorlagebehälter, anschließend Permeatwasserzusatz zur Konstanthaltung von 40 % des Ausgangsvolumens.

Abtrennung des Permeatwassers aus dem Permeat durch Vakuumdestillation bei ca. 50°C:

Permeatwasser mit weniger als 0,2 Vol.% Alkohol

Alkohol von ca. 90 Vol.%

Abtrennung von 6,7 l Permeatdestillat durch die Permeat-Vakuumdestillation entsprechend 6 l reinen Alkohols.

Gewinnung von 6,7 l Wasser aus zusätzlichem Schaumwein durch Schaumwein-Vakuumdestillation:

Entgeistung des zusätzlichen Schaumweins auf weniger als 0,5 Vol.% in einer Getränke-Vakuumdestillationsanlage 24, die Schaumweindestillat an einen Getränkedestillat-Sammelbehälter 27 abgibt.

Trennung des so gewonnenen Schaumweindestillats durch die nächste Stufe der Vakuumdestillation (Permeat-Vakuumdestillation) in Wasser und Alkohol von ca. 90 Vol.%.

Zufuhr der 6,7 l aus dem zusätzlichen Schaumwein durch Vakuumdestillation gewonnenen Wassers zu 93,3 l Schaumwein in dem Vorlagegefäß.

Nach Abschluß des Entalkoholisierungsvorgangs sind somit 100 l Qualitätsschaumwein mit 5 Vol.% Alkohol und mit einem $CO_2$-Druck von ca. 5 bar / 20°C hergestellt.

**Patentansprüche**

1. Verfahren zum Herabsetzen des Alkoholgehalts alkoholhaltiger Getränke, insbesondere Wein und Schaumwein, nach dem Umkehrosmoseverfahren, wobei das durch die Umkehrosmose aus dem vorgelegten Getränk gewonnene alkoholhaltige Permeat im Vakuum destilliert bzw. abgedampft wird (Permeat-Vakuumdestillation) und das daraus erzeugte alkoholfreie Permeatwasser dem vorgelegten Getränk wieder zugeführt wird,
dadurch gekennzeichnet,
daß das vorgelegte Getränk zunächst unter Herabsetzung eines Ausgangsvolumens im Umkehrosmosekreislauf geführt wird, daß nach Erreichen eines vorgegebenen Werts der Volumenreduktion im vorgelegten Getränk Permeatwasser in einer zur Aufrechterhaltung des vorgegebenen Werts erforderlichen Menge während Fortsetzung des Umkehrosmosekreislaufs zugegeben wird, bis eine vorbestimmte Menge Alkohol durch die anschließende Permeat-Vakuumdestillation abgetrennt ist, daß anschließend mit Permeatwasser rückverdünnt wird und daß bei der Rückverdünnung die dem vorgelegten Getränk durch die Umkehrosmose und anschließende Permeat-Vakuumdestillation entzogene Menge Permeatdestillat, das im wesentlichen aus Alkohol besteht, als aus zusätzlichem Getränk durch Vakuumdestillation gewonnenes Wasser zugesetzt wird.

2. Verfahren nach Anspruch 1,
dadurch gekennzeichnet,
daß aus dem zusätzlichen Getränk in einem getrennten Vakuumdestillationsverfahren schwach alkoholhaltiges Getränkedestillat gewonnen wird, aus dem in einer zweiten Vakuumdestillation das erforderliche alkoholfreie Zusatzwasser gewonnen wird.

3. Verfahren zum Herabsetzen des Alkoholgehalts von Schaumwein oder Wein nach Anspruch 1 oder 2,
dadurch gekennzeichnet,
daß dem vorgelegten Schaumwein oder Wein Metaweinsäure und/oder ein Inhibitor gegen das Auskristallisieren von Weinstein zugegeben wird und daß das vorgelegte Ausgangsvolumen Schaumwein oder Wein auf einen vorgegebenen Wert von ca. 40 % durch die Umkehrosmose herabgesetzt wird.

4. Verfahren nach einem der vorangehenden Ansprüche,
dadurch gekennzeichnet,
daß die Umkehrosmose bei ca. 60 bar erfolgt.

5. Verfahren nach einem der vorangehenden Ansprüche,
dadurch gekennzeichnet,
daß das Permeat vor der Permeat-Vakuumdestillation durch Temperaturaustausch mit dem Permeatwasser von der Destillationsstufe kommend vorerwärmt wird.

6. Verfahren zum Herabsetzen des Alkoholgehalts $CO_2$- und alkoholhaltiger Getränke, nach einem der vorangehenden Ansprüche,
dadurch gekennzeichnet,
daß das vorgelegte Getränk mit einem gegenüber dem Endprodukt (entalkoholisiertes Getränk) leicht überhöhten $CO_2$-Gehalt ausgestattet ist.

7. Einrichtung zum Herabsetzen des Alkoholgehalts alkoholhaltiger Getränke, insbesondere Wein oder Schaumwein, mit einer Umkehrosmoseanlage, durch die vorgelegtes Getränk geführt wird, mit einer Permeat-Vakuumdestillationsanlage, die mit aus der Umkehrosmoseanlage gewonnenen alkoholhaltigem Permeat speisbar ist, sowie mit Mitteln zur Zurückführung von mittels der Permeat-Vakuumdestillationsanlage gewonnenen alkoholfreien Permeatwassers zu dem vorgelegten Getränk von Aromastoffen zu dem entalkoholisierten Getränk,
dadurch gekennzeichnet,
daß eine Getränke-Vakuumdestillationsanlage (24) zur Gewinnung von schwach alkoholhaltigem Getränkedestillat aus zusätzlichem Getränk vorgesehen ist, welche mit Mitteln (Getränkedestillat-Sammelbehälter 27 Permeat-Sammelbehälter 10) zur Einspeisung des aus der Getränke-Vakuumdestillationsanlage (24) gewonnenen Getränkedestillats in die Permeat-Vakuumdestillationsanlage (14) derart in Verbindung steht, daß das Wasser aus dem Getränkedestillat zusätzlich zu dem Permeatwasser in das vorgelegte Getränk zur Aufrechterhaltung eines vorgegebenen
Volumens einspeisbar ist.

8. Einrichtung nach Anspruch 7,
dadurch gekennzeichnet,
daß in einer Permeatleitung (20) zwischen der
Permeat-Vakuumdestillationsanlage (14) und
einem Getränkevorlagebehälter (3) ein
Permeatwasser-Sammelbehälter (21) angeordnet
ist und daß ein Destillatabfluß der Getränke-
Vakuumdestillationsanlage (24) zu einem
Getränkedestillat-Sammelbehälter (27) geführt
ist, aus dem das Getränkedestillat in den
Permeat-Sammelbehälter (10) einspeisbar ist.

9. Einrichtung nach einem der Ansprüche 7-8,
dadurch gekennzeichnet,
daß in eine Getränkeleitung (6) von dem
Vorlagebehälter (3) zu der Umkehrosmoseanlage
(8) eine Hochdruckpumpe (9) eingeschaltet ist.

10. Einrichtung nach einem der Ansprüche 7 - 9,
dadurch gekennzeichnet,
daß die Permeatleitung (12a) und die
Permeatwasserleitung (18) durch einen
Wärmeaustauscher (13) wärmeleitend
miteinander gekoppelt sind.

**Claims**

1. A process for reducing the alcohol content of
alcoholic beverages, in particular wine and
sparkling wine, by the reverse osmosis process,
the alcohol-containing permeate obtained by the
reverse osmosis from the original beverage being
distilled or evaporated in vacuo (permeate
vacuum distillation) and the alcohol-free
permeate water thus produced being returned to
the original beverage, characterized in that the
original beverage is first passed around the
reverse osmosis circulation, its starting volume
being reduced, that, after a predetermined value
of volume reduction has been reached in the
original beverage, permeate water is added in a
quantity required for maintaining the
predetermined value during the continuation of
the reverse osmosis circulation, until a
predetermined quantity of alcohol has been
separated off by the subsequent permeate
vacuum distillation, that the beverage is then
rediluted with permeate water and that, during
the redilution, the quantity, removed from the
original beverage by the reverse osmosis and
subsequent permeate vacuum distillation, of
permeate distillate consisting essentially of
alcohol is added as water obtained from
additional beverage by vacuum distillation.

2. Process according to Claim 1, characterized
in that a beverage distillate of low alcohol
content is obtained from the additional beverage
in a separate vacuum distillation process and the
required alcohol-free additional water is obtained
from this in a second vacuum distillation.

3. Process for reducing the alcohol content of
sparkling wine or wine according to Claim 1 or 2,
characterized in that metatartaric acid and/or an inhibitor of tartar crystallization is added to the
original sparkling wine or wine and that the
original starting volume of sparkling wine or wine
is reduced by the reverse osmosis to a
predetermined value of about 40 %.

4. Process according to one of the preceding
claims, characterized in that the reverse osmosis
is carried out under about 60 bar.

5. Process according to one of the preceding
claims, characterized in that the permeate from
the permeate vacuum distillation is preheated by
temperature exchange with the permeate water
coming from the distillation stage.

6. Process for reducing the alcohol content of
$CO_2$-and alcohol-containing beverages,
according to one of the preceding claims,
characterized in that the original beverage has
been provided with a $CO_2$ content slightly higher
than that of the end product (dealcoholized
beverage).

7. Equipment for reducing the alcohol content
of alcoholic beverages, in particular wine or
sparkling wine, with a reverse osmosis unit,
through which original beverage is passed, with a
permeate vacuum distillation unit which can be
fed with alcohol-containing permeate obtained
from the reverse osmosis unit, and with means
for returning alcohol-free permeate water
obtained by the permeate vacuum distillation unit
to the original beverage and aroma substances to
the dealcoholized beverage, characterized in that
a beverage vacuum distillation unit (24) for
obtaining beverage distillate of low alcohol
content from additional beverage is provided,
which distillation unit is connected to means
(beverage distillate receiver 27, permeate
receiver 10) for feeding the beverage distillate
obtained from the beverage vacuum distillation
unit (24) into the permeate vacuum distillation
unit (14) in such a way that the water from the
beverage distillate can be fed, in addition to the
permeate water, into the original beverage in
order to maintain a predetermined volume.

8. Equipment according to Claim 7,
characterized in that a permeate water receiver
(21) is provided in a permeate line (20) between
the permeate vacuum distillation unit (14) and a
beverage stock vessel (3) and that a distillate
outflow from the beverage vacuum distillation
unit (24) is led to a beverage distillate receiver
(27), from which the beverage distillation can be
fed into the permeate receiver (10).

9. Equipment according to one of Claims 7-8,
characterized in that a high-pressure pump (9) is
installed in a beverage line (6) from the stock
vessel (3) to the reverse osmosis unit (8).

10. Equipment according to one of Claims 7-9,
characterized in that the permeate line (12a) and
the permeate water line (18) are coupled to one
another by a heat exchanger (13) for heat
conduction.

## Revendications

1. Procédé pour diminuer le taux d'alcool de boissons alcoolisées, plus particulièrement de vin et de vin pétillant, par le procédé de l'osmose inverse, le perméat alcoolisé obtenu par l'osmose inverse à partir de la boisson chargée en tête de l'installation étant distillé ou évaporé dans le vide (distillation sous vide du perméat) et l'eau de perméat exempte d'alcool qui est ainsi produite étant ramenée dans la boisson chargée en tête, caractérisé en ce que la boisson chargée en tête est envoyée dans le circuit d'osmose inverse dans des conditions telles qu'il se produit tout d'abord une diminution d'un volume initial, en ce qu'après qu'une valeur prédéfinie de la réduction de volume dans la boisson chargée en tête a été atteinte, de l'eau de perméat est ajoutée, dans une quantité nécessaire pour maintenir la valeur prédéfinie, pendant que se poursuit la circulation d'osmose inverse, jusqu'à ce qu'une quantité prédéterminée d'alcool ait été séparée par l'opération subséquente de distillation sous vide du perméat, en ce qu'il est ensuite procédé à une redilution avec de l'eau de perméat et en ce que pour la redilution, il est ajouté une quantité d'eau, obtenue par distillation sous vide à partir de boisson supplémentaire, qui correspond à la quantité de distillat de perméat, constitué essentiellement par de l'alcool, qui est extraite de la boisson chargée en tête par l'osmose inverse et la distillation sous vide subséquente du perméat.

2. Procédé selon la revendication 1, caractérisé en ce qu'à partir de la boisson supplémentaire, il est obtenu, en une opération séparée de distillation sous vide, un distillat de boisson faiblement alcoolisé, à partir duquel, il est obtenu, en une seconde distillation sous vide, l'eau d'addition exempte d'alcool qui est nécessaire.

3. Procédé pour diminuer le taux d'alcool de vin pétillant ou de vin selon la revendication 1 ou 2, caractérisé en ce qu'il est ajouté, au vin pétillant ou au vin chargé en tête, de l'acide métatartrique et/ou un inhibiteur contre la séparation à l'état cristallin du tartre, et en ce que le volume initial de vin pétillant ou de vin chargé en tête est réduit à une valeur prédéfinie d'environ 40 % par l'osmose inverse.

4. Procédé selon l'une quelconque des revendications 1 à 3, caractérisé en ce que l'osmose inverse est effectuée sous 60 bars environ.

5. Procédé selon l'une quelconque des revendications 1 à 3, caractérisé en ce qu'avant la distillation sous vide du perméat, le perméat est préchauffé par échange de température avec l'eau de perméat provenant de l'étage de distillation.

6. Procédé pour diminuer le taux d'alcool de boissons contenant du $CO_2$ et de l'alcool, selon l'une qquelconque des revendications 1 à 5, caractérisé en ce que la boisson chargée en tête est dotée d'une teneur en $CO_2$ légèrement surélevée par rapport au produit final (boisson désalcoolisée).

7. Dispositif pour diminuer le taux d'alcool de boissons alcoolisées, plus particulièrement de vin ou de vin pétillant, comprenant une installation d'osmose inverse à travers laquelle est envoyée la boisson chargée en tête, une installation de distillation sous vide du perméat qui peut être alimentée en perméat alcoolisé obtenu à partir de l'installation d'osmose inverse, ainsi que des moyens pour ramener dans la boisson chargée en tête l'eau de perméat exempte d'alcool qui est obtenue au moyen de l'installation de distillation sous vide du perméat et pour ramener dans la boisson désalcoolisée des substances aromatiques, caractérisé par le fait qu'il est prévu, pour l'obtention d'un distillat de boisson faiblement alcoolisé à partir de boisson supplémentaire, une installation de distillation sous vide de boisson (24) qui est en communication avec des moyens [réservoir collecteur de distillat de boisson (27), réservoir collecteur de perméat (10)] pour alimenter l'installation de distillation sous vide du perméat (14) en distillat de boisson obtenu à partir de l'installation de distillation sous vide de boisson (24), de telle manière que l'eau provenant du distillat de boisson puisse être introduite, en plus de l'eau de perméat, dans la boisson chargée en tête, afin de maintenir un volume prédéfini.

8. Dispositif selon la revendication 7, caractérisé en ce qu'un réservoir collecteur d'eau de perméat (21) est disposé dans une conduite de perméat (20) entre l'installation de distillation sous vide du perméat (14) et un réservoir de boisson (3), et en ce qu'un écoulement de distillat de l'installation de distillation sous vide de boisson (24) aboutit à un réservoir collecteur de distillat de boisson (27), à partir duquel le distillat de boisson peut être introduit dans le réservoir collecteur de perméat (10).

9. Dispositif selon la revendication 7 ou 8, caractérisé en ce qu'une pompe haute pression (9) est intercalée dans une conduite de boisson (6) allant du réservoir de tête (3) à l'installation d'osmose inverse (8).

10. Dispositif selon l'une quelconque des revendications 7 à 9, caractérisé en ce que la conduite de perméat (12a) et la conduite d'eau de perméat (18) sont accouplées entre elles de façon thermoconductrice par un échangeur de chaleur (13).